(19) Europäisches Patentamt / European Patent Office / Office européen des brevets

(11) **EP 2 545 328 B1**

(12) **EUROPEAN PATENT SPECIFICATION**

(45) Date of publication and mention of the grant of the patent:
**13.03.2019  Bulletin 2019/11**

(51) Int Cl.:
***C23C 18/12*** *(2006.01)*        ***C09D 1/00*** *(2006.01)*

(21) Application number: **11733136.3**

(22) Date of filing: **12.01.2011**

(86) International application number:
**PCT/NO2011/000014**

(87) International publication number:
**WO 2011/087374 (21.07.2011 Gazette 2011/29)**

(54) **METHOD FOR MAKING AN ABSORBER COATING FOR SOLAR HEATING AND THE COATING AS SUCH**

VERFAHREN ZUR HERSTELLUNG EINER ABSORPTIONSBESCHICHTUNG FÜR SONNENWÄRME UND BESAGTE BESCHICHTUNG

PROCÉDÉ DE FABRICATION D'UN REVÊTEMENT D'ABSORBEUR POUR CHAUFFAGE SOLAIRE ET LE REVÊTEMENT EN TANT QUE TEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2010  NO 20100057**

(43) Date of publication of application:
**16.01.2013  Bulletin 2013/03**

(73) Proprietor: **Norsk Hydro ASA**
**0240 Oslo (NO)**

(72) Inventors:
• **HALLENSTVET, Merete**
  **N-3128 Nøtterøy (NO)**
• **LACAU, Anica**
  **N-3080 Holmestrand (NO)**
• **TILSET, Bente, Gilbu**
  **N-1395 Hvalstad (NO)**
• **SIMON, Christian**
  **N-0873 Oslo (NO)**
• **DENKMANN, Volker**
  **D-47906 Kempen (DE)**
• **BLECHER, Axel**
  **D-53895 Niederkassel (DE)**
• **SIEMEN, Andreas**
  **D-41363 Jüchen (DE)**
• **SCHENKEL, Wilhelm**
  **41515 Grevenbroich (DE)**

(74) Representative: **Speck, Philip**
**Norsk Hydro ASA**
**Intellectual Property Department**
**P.O. Box 980 Skøyen**
**0240 Oslo (NO)**

(56) References cited:
**WO-A2-2007/147399      US-B1- 6 605 365**
**US-B1- 6 605 365**

• **LEON KALUZA ET AL: JOURNAL OF SOL-GEL SCIENCE AND TECHNOLOGY, vol. 20, no. 1, 1 January 2001 (2001-01-01), pages 61-83, XP055019926, ISSN: 0928-0707, DOI: 10.1023/A:1008728717617**
• **JAPELJ B ET AL: "Preparation of a TiMEMO nanocomposite by the sol-gel method and its application in coloured thickness insensitive spectrally selective (TISS) coatings", SOLAR ENERGY MATERIALS AND SOLAR CELLS, ELSEVIER SCIENCE PUBLISHERS, AMSTERDAM, NL, vol. 92, no. 9, 1 September 2008 (2008-09-01), pages 1149-1161, XP022735464, ISSN: 0927-0248, DOI: 10.1016/J.SOLMAT.2008.04.003 [retrieved on 2008-05-27]**

- **RINCON ET AL: "Optical characterization of tandem absorber/reflector systems based on titanium oxide-carbon coatings", SOLAR ENERGY MATERIALS AND SOLAR CELLS, ELSEVIER SCIENCE PUBLISHERS, AMSTERDAM, NL, vol. 91, no. 15-16, 19 July 2007 (2007-07-19), pages 1421-1425, XP022152488, ISSN: 0927-0248, DOI: 10.1016/J.SOLMAT.2007.04.005**

- **CRNJAK OREL Z C ET AL: "Spectrally selective paint coatings: Preparation and characterization", SOLAR ENERGY MATERIALS AND SOLAR CELLS, ELSEVIER SCIENCE PUBLISHERS, AMSTERDAM, NL, vol. 68, no. 3-4, 1 June 2001 (2001-06-01) , pages 337-353, XP004230574, ISSN: 0927-0248, DOI: 10.1016/S0927-0248(00)00367-6**

**Description**

The present invention relates to a method for making an absorber coating for solar heating, in particular a coating to be applied on a thin aluminium metal sheet. The invention further includes a solar coating made by the method as well as the application of the coating.

Solar heating harnesses the power of the sun to provide solar thermal energy for different purposes such as solar hot water, solar space heating and solar pool heaters. A solar heating system saves energy, reduces utility costs, and produces clean energy. The efficiency and reliability of solar heating systems have increased dramatically, making them attractive options in connection with energy supply to private houses as well as in stores and office spaces.

Most solar water-heating systems for buildings have two main parts, namely a solar collector and a storage tank. Solar water heaters use the sun to heat either water or a heat-transfer fluid in the collector. Heated water is then held in the storage tank ready for use, with a conventional system providing additional heating as necessary. The tank can be a modified standard water heater, but it is usually larger and very well insulated. Solar water heating systems can be either active or passive, but the most common are active systems. The most common collector used in solar hot water systems is the flat plate collector. The present invention relates in particular to a coating for such flat sheet collector.

In a project under which the present invention was conceived, the inventors aimed to produce a sol-gel based coating applied in particular on aluminium substrate by a coil coating method and having the following properties:

- ◦ High solar absorbance (0,28 - 2,5 μm), a ≥ 95%
- ◦ Low thermal emissivity (2,5 - 50 μm), e ≤ 0,1.
- ◦ Maximum possible surface temperature
- ◦ Low viscosity, suitable for coil coating
- ◦ Drying at 160-600°C metal temperature.
- ◦ Withstand 600°C up to to 2h
- ◦ Withstand 400°C for 100 h.
- ◦ Lifetime stability at 230°C.
- ◦ Stable against humidity.
- ◦ Long term stability: Corrosion resistance in microclimate ISO CD 12952-2.

Presently different types of coatings for solar energy absorbing purposes are known in the market such as black paints with organic binder, or selective coatings prepared by CVD sputter type and sol-gel type coatings. Many of the known coating types do not, however, comply with the above requirements such as the requirement with regard to temperature and corrosion.

Sol-gel type coatings, in particular inorganic, are known to have variable and even poor adhesion properties. However, they are known to have chemical stability and thermal stability even at higher temperatures. Further advantages with these types of coatings are the modest requirement of equipment and easiness to apply the coating, low energy consumption and the possibility of combining different types of layers

From WO 2007/147399 is known a process for producing a solar absorbing coating comprising the steps of coating of a substrate with a titanium precursor solution to produce a titanium dioxide layer by the sol-gel technique and heat treating the substrate to pyrolysis and crystallize the layer and where silver ions are added to the titanium precursor solution prior to coating. This known solution does not, however, comply with the requirements as regards solar absorbance mentioned above.

A method for making an absorber coating for solar heating to be applied on a metal substrate by dip-coating is known. The coating is of the sol-gel type based on a metal oxide sol where manganese ferrite black is mixed into the sol, in the form of metal-organical solutions (Mn-acetate, Fe and Cu chloride), followed by application of the mixed sol lacquer on the substrate and thereafter drying at 500°C to obtain the sol-gel coating (LEON KALUZA ET AL:JOURNAL OF SOL-GEL SCIENCE AND TECHNOLOGY, vol. 20, no. 1, 1 January 2001 (2001-01 -01), pages 61-83).

US 6,605,365 relates to a different sol-gel coating based on alkoxyzirconium and an organosilane where the Si/Zr and sol ratio is important for its performance. This known sol includes pigments, but the pigments include a large amount metal flakes to control color, gloss and reflectivity. The coating is thus not a solar absorbance coating, but a conventional color coating with different properties such as electrical conductivity.

With the present invention is provided a cost effective method for making an absorber coating for solar heating, as well as a coating as such which is made according to the method.

With the invention is further provided a method and coating where the above-mentioned requirements as regards solar absorbance, thermal emissivity, thermal stability and resistance etc. are to an acceptable or large extent fulfilled.

The method is characterized by the features as defined in the independent claim 1 and the coating as such is characterized by the feature as defined in the independent claim7.

Dependent claims 2 - 6 and 8 - 14 define preferred embodiments of the invention.

The present invention will be further described in the following by way of examples and with reference ti the figures, where:

Fig. 1    IR spectrum of samples according to the invention coated with Manganese ferrite black spinel in CeO2 (NO3) sol on electrochemical degreased AA1050 substrate

Fig. 2    Shows the IR spectrum of Manganese ferrite black spinel,

Fig. 3    shows UV-VIS-NIR spectra of samples coated with Manganese ferrite black spinel in CeO2 (NO3) sol on electrochemical degreased AA1050 substrate

In view of the above-mentioned requirements and previous experiences with coating preparations, the inventors initially decided to investigate inorganic coatings based on black inorganic pigments dispersed in a metal oxide sol such as CeO2 based sol.

The IR spectrum of pure CeO2 show no IR bands; thus it has low emissivity and should be suited as an inorganic binder for black, solar absorbing pigments. Introductory experiments showed that CeO2 coatings performed well with respect to adhesion and scratch resistance after heating to 600°C but for lower temperature applications ways of improving the adhesion has been investigated, either by organic or inorganic additive in the sol or by adhesion promotors on the passivation layer.

Example1:.

The following starting materials were used:

- *Ceria nitrate sol*, with 10-30 wt% $CeO_2$, particle size 10-20 nm and pH = 1.5
- *Black Pigment*, Manganese ferrite black spinel with average particle size 0.5 $\mu$m and pH = 6.0 when dispersed in water.

The pigment has a very low reflectance in the UV-VIS-NIR range. The composition was shown to be $Mn_3Cu_2FeO_8$ by SEM (EDS).

- Organic additive, for improving adhesion after low temperature heat treatment (280°C). Different concentrations of the main ingredient were tested, see the result table.

Lacquer preparation procedures.

Good dispersion of the pigment in the sol is needed; preferably particle sizes $\leq$ 0.5 $\mu$m should be achieved. Foam formation should be avoided.

For introductory lab-scale samples, ultrasonic treatment was combined with stirring. The procedure giving the most stable dispersion was: 3x10 min ultrasonic horn treatment (instrument: Branson Sonifier 450) with magnetic stirring. Output was set to 7, with 50% duty cycle. The sample was standing in an ice bath to avoid overheating. Any foam formed was removed by gentle stirring, vacuum treatment and ultrasonic bath + slow (100 rpm) stirring over night

For practical reasons, ultrasonic treatment may not be used for industrial scale lacquers.

For industrial scale samples were produced based on conform laboratory procedure with the following modifications:

- pigment wetting/dispersion was carried out in a high shear dispersing machine, adding 25-35% of the total amount of sol. Stirring time until particle size average 0,5 $\mu$m achieved.
- organic additives were added
- the formulation was completed with balance of sol.

Lacquer was prepared in a jet stream mixer, with very good dispersion properties and very low amount of foam during mixing.

Application procedure for the lab-scale samples:

Introductory experiments were performed on electrochemical degreased aluminium dip coated in the lab. Retraction rate: 1-10 mm/s; 3 mm/s was preferred.

After introductory experiments, samples were bar coated, using bars 4-22; bar 4 was preferred and the substrate electrochemical degreased.

Industrial line trials were performed using thin Al strip, coated continuously through a coil coating process. The first step after de-coiling was the pre-treatment section, which included electrochemical degreasing. The prepared solar coating (lacquer) was applied by deep feed in a three rollers system., where the applicator roller rotated reverse, the metering roller forward and the third roller reverse, related to the strip direction. The curing was carried out in a convention oven, with warm air circulation and temperature set up to achieve a PMT of minimum 280°C. Coated strip went through a cooling (air and water) unit after exit oven and re-winded again.

Heat treatment of lab coated samples.

After coating, the lab-coated samples were heated for 1 min in a furnace adjusted to 280°C or 260°C. The peak metal temperature (PMT) was always > 250°C. The samples were after heat treatment either cooled in air or in water. Some samples were heated a second time, in a furnace at 500 or 600°C for 10 min. All furnaces had air as atmosphere.

Adhesion tests.

Several test methods have been applied: crosshatch according to DIN EN 13523-6:2002 and bending tests according to DIN EN 13523-7:2001 and rub test:
Crosshatch Tape off: The adhesion was evaluated based on whether or not the tape pulled off the coating. Samples were graded on a scale from 1 to 4, where 1 was the best. To get a "1", the glue from the tape must remain on the coating after pull-off. A sample graded "4" had very easy coating release - all the coating was on the tape, regardless of whether there was a crosshatch pattern or not.

A similar grading system was used for bending tests. The samples were folded and then opened - if the coating was intact and not rubbed off by using a finger afterwards, the grading was denoted "1".

Rub test according to DIN EN 13523-11:2003 is performed by rubbing back and forth with a special roundel while applying a fixed pressure of 10 N. The number of double rubs before the coating is penetrated to show substrate material is measured. A good coating should withstand $\geq$ 50 rubs.

Optical properties.

IR and UV-VIS-NIR spectra were used to characterize optical properties of the coated Al-surface.

The UV-VIS-NIR spectrum was weighted, using the solar spectrum, to obtain the total solar reflection (TSR) value. The solar absorption ($\alpha$) is found from TSR: $\alpha = (100-TSR)/100$
The IR spectrum was weighted, using black body radiation at 300 K, to obtain the emissivity ($\varepsilon$).

The solar efficiency (E) of the coating depends both on $\alpha$ and $\varepsilon$. The following two formulas were used:

$$1)\ E = \alpha/\varepsilon$$

$$2)\ E = \alpha^2/\varepsilon$$

The validity of these formulas has so far not been confirmed experimentally.

Results.

There are two basic requirements to a solar coating for industrial use: high solar efficiency and good adhesion to the Al-substrate.

The results from the lab-scale and industrial scale tests as described above are shown in the below table 1.

**Table 1.**

| Sample no. | Formulation | Emisivity | TSR | Adhesion double rub | Adhesion tape off |
|---|---|---|---|---|---|
| 1 | Sol+12,4%Black pigment, no additive | 0,03 | 16,93 | >20 | Low |

(continued)

| Sample no. | Formulation | Emisivity | TSR | Adhesion double rub | Adhesion tape off |
|---|---|---|---|---|---|
| 2 | Sol+12,4%Black pigment, no additive | | | No adhesion | Low |
| 3 | Sol+12.4% Black pigment + 10% Add2 | 0,11 | 16,26 | >20 | Low |
| R4 | Sol+10% Black pigment + 10% Add2 | 0,14 | 13,56 | >50 | Good |
| 5 | Sol+10% Black pigment + 5% Add2 | 0,08 | 18,38 | >50 | Good |
| R15A | Sol+8%Black pigment+7%Add. | 0,13 | 18,41 | 100 | Good |
| R18 | Sol+10%Black pigment+5%Add | 0,17 | 13,59 | 100 | Good |
| R20 | Sol+8%Black pigment+7%Add | 0,15 | 16,82 | 100 | Good |
| 6 | 10% Black pigment + 1% Add2 | 0,07 | 18,17 | >50 | lower than no.4 and 5 |
| F5 90-50 | Sol+8% Black pigment+ 7%Add. Industrial application | 0,13 | 18,47 | >30 | Good |
| F5 90-60 | Sol+8%Black pigment+ 7%Add. Industrial application | 0,15 | 16,09 | >30 | Good |
| 4 | 12.4% GV tynn + 1 % Add2 | 0,10 | 15,27 | >50 | Good |

Samples F5 90-50 and F5 90-60 in Table 1 are related to the Industrial line trials, whereas all of the other samples are related to the lab-scale trials.

Example 2

The adhesion of sol-gel coating to an aluminium substrate can be improved by preparing the aluminium surface with a tie layer between the sol-gel coating and the aluminium substrate. This tie layer can for example be a conversion coating or an inorganic silicate based primer, or a conversion coating/primer based on $TiO_2$. The following starting materials were used:

- *CeO2(NO3) sol*, with 20 wt% $CeO_2$, particle size 10-20 nm and pH = 1.5
- *Black Pigment*, Manganese ferrite black spinel with average particle size 0.5 $\mu$m and pH = 6.0 when dispersed in water.

Lacquer preparation was done as in industrial scale described in example 1 above using a jet stream mixer.
Further, industrial line trials were performed as in example 1 above using thin Al strip, coated continuously through a coil coating process. The first step after de-coiling was the pre-treatment section. The prepared solar coating (lacquer) was applied by NIP feed in a three rollers system, where the applicator roller rotated reverse, the metering roller forward and the third roller reverse, related to the strip direction. The curing was carried out in a convention oven, with warm air circulation and temperature set up to achieve a PMT of minimum 280°C. Coated strip went through a cooling (air and water) unit after exit oven and re-winded again.
The same test methods as in example 1 were applied in this example.

Tabel 2 Adhesion and emissivity of different substrates

| Sample | Formulation | Alloy | Pre-treatment * | Adhesion double rub | Emissivity | TSR |
|---|---|---|---|---|---|---|
| Lab 1 | Sol+10% black pigment | 3005 | Cr VI NR | <5 | 0,06 | |
| Lab 2 | Sol+10% black pigment | 1050 | ECD 3b | <20 | 0,05 | |
| Lab 3 | Sol+10% black pigment | 1050 | ECD 4b | <10 | 0,06 | |

(continued)

| Sample | Formulation | Alloy | Pre-treatment * | Adhesion double rub | Emissivity | TSR |
|---|---|---|---|---|---|---|
| Lab 4 | Sol+15%Black pigment | 8011A 0,21 mm | Cr free Si | 50 | 0,11-0,17 | 7,33-7,47 |
| Lab 5 | Sol+10% Black pigment | 3005 | Cr VI NR | <10 | 0,06 | 30,34 |
| Line(BLA)3 | no | 3005 | Cr 3+ | n.a. | 0,09 | 23,05 |
| Line (A)4 | no | 1050 | ECD | n.a. | 0,03 | |
| Line(BLA)3 | no | 3005 | Cr free Si | n.a. | 0,03 | |

*) ECD = Electro Chemical Degreasing
Cr VI NR = No rinse chemical pre-treatment by chromating, hexavalent Chromium
Cr free Si = Chromium free chemical pre-treatment, in presence of Silicium
Cr 3+ = Chemical pre-treatment with trivalent Chromium

Optical properties of coated samples.

Typical IR and UV-VIS-NIR spectra of coatings without organic adhesion promotor are shown in Figs. 1 and 3, respectively.

An absorption band at 7 $\mu$m is detected in the IR range (Fig. 1) for all samples, with varying intensity. This feature is probably due to $Ce(NO_3)_4$, since the IR spectrum of Black pigment (Fig. 2) did not show any strong features in this region. Furthermore, the band intensity decreases after heating to 500°C and 600°C, probably due to decomposition of $Ce(NO_3)_4$ to nitrous oxides and $CeO_2$.

In the UV-VIS-NIR range, rather indistinct features are seen (Fig. 2). As required, the absorption in the solar region is large, with a gradual development to high reflectance in the IR region.

The invention as defined in the claims is not restricted to the above examples. Thus, the additive which may be added to and mixed into the sol may be an acrylate- and styrocopolymer, a mixture of polyvinyl acetate polymer and -copolymer, polyvinyl acetate, polyvinyl alcohol, polyvinyl ether, polyurethane and/or polymetacrylathomo and -copolymer, acrylat dispersions, polyester.

Further, the coating may be based on a mixture of two sols where the second sol is a nano scaled $Al_2O_3$, $SnO_2$, $Y_2O_3$, ZnO or $SiO_2$ sol.

**Claims**

1. Method for making an absorber coating for solar heating to be applied on a metal substrate, in particular a coating to be applied on a thin aluminium sheet metal,
   **characterised in that**
   the coating is an aqueous sol-gel type based on a metal oxide sol where manganese ferrite black $Mn_3Cu_2FeO_8$ pigment particles are intimately mixed into the sol followed by application of the mixed sol lacquer on the substrate and thereafter drying in air at an elevated temperature to obtain the sol-gel coating.

2. Method according to claim 1,
   **characterised in that** the coating is based on mixing of two sols.

3. Method according to claims 1 and 2,
   **characterised in that**
   an organic additive is added and mixed into the sol lacquer immediately prior to application on the substrate.

4. Method according to claim 3,
   **characterized in that**
   the additive is an acrylate- and styrocopolymer, a mixture of polyvinyl acetate polymer and -copolymer, polyvinyl acetate, polyvinyl alcohol, polyvinyl ether, polyurethane and/or polymetacrylathomo and -copolymer, acrylat dispersions, polyester.

**5.** Method according to claims 1 - 4,
**characterised in that**
the drying takes place at a temperature between 180 - 600°C.

**6.** Method according to claim 1 - 5,
**characterized in that**
the substrate, after the drying at 180 - 600°C, is cooled in air or quenched to room temperature in water and thereafter is dried, reheated and held at a temperature of 300 - 600°C for at least 10 min

**7.** Method according to 1 - 6
**characterised in that**
the sol lacquer is applied to the substrate by spraying, dipping or coil coating.

**8.** Absorber coating for solar heating to be applied on a metal substrate, in particular a coating to be applied on a thin aluminium metal sheet,
**characterised in that**
the coating is an aqueous sol-gel type based on a metal oxide sol and with manganese ferrite black $Mn_3Cu_2FeO_8$ pigment particles which are intimately mixed into the sol prior to application on the substrate.

**9.** Absorber coating for solar heating according to claim 8,
**characterised in that**
the metal oxide on which the sol is based is $CeO_2$ ($NO_3$) or $CeO_2$ (ACT) with between 5 - 30 wt% $CeO_2$ having a particle size of 2 - 100 nm

**10.** Absorber coating for solar heating according to claim 8 - 9,
**characterised in that**
it is based on a mixture of two sols

**11.** Absorber coating for solar heating according to claim 8 - 10,
**characterised in that**
the second sol is a nano scaled $Al_2O_3$, $SnO_2$, $Y_2O_3$, ZnO or $SiO_2$.

**12.** Absorber coating for solar heating according to claim 8 - 11,
**characterised in that**
the $CeO_2$ is between 15-25 wt%

**13.** Absorber coating for solar heating according to claim 8 -12,
**characterised in that**
an organic additive is added and mixed into the sol lacquer immediately prior to application on the substrate and before temperature heat treatment for improving adhesion.

**14.** Absorber coating for solar heating according to claim 13,
**characterised in that** the additive is an acrylate- and styrocopolymer, a mixure of polyvinyl acetate polymer and -copolymer, polyvinyl acetate, polyvinyl alcohol, polyvinyl ether, polyurethane and/or polymetacrylathomo and -copolymer, acrylat dispersions, polyester.


**Patentansprüche**

**1.** Verfahren zur Herstellung einer Absorberbeschichtung für die Solarthermie, die auf einem Metallsubstrat aufgetragen wird, insbesondere eine Beschichtung, die auf einem dünnen Aluminiumblech aufgetragen wird,
**dadurch gekennzeichnet, dass**
die Beschichtung ein wässriger Solgel-Typ ist, basierend auf einem Metalloxidsol, wobei Pigmentpartikel von Manganferritschwarz $Mn_3Cu_2FeO_8$ innig in das Sol eingemischt werden, gefolgt von der Auftragung des gemischten Sollacks auf das Substrat, und der anschließenden Trocknung an der Luft bei einer erhöhten Temperatur, um die Solgelbeschichtung zu erhalten.

**2.** Verfahren nach Anspruch 1,

**dadurch gekennzeichnet, dass** die Beschichtung auf dem Mischen von zwei Sols basiert.

3. Verfahren nach Anspruch 1 und 2,
**dadurch gekennzeichnet, dass**
ein organisches Additiv hinzugefügt, und unmittelbar vor dem Auftragen auf das Substrat in den Sollack gemischt wird.

4. Verfahren nach Anspruch 3,
**dadurch gekennzeichnet, dass**
das Additiv ein Acrylat- und Styrocopolymer, eine Mischung aus Polyvinylacetatpolymer und -copolymer, Polyvinylacetat, Polyvinylalkohol, Polyvinylether, Polyurethan und/oder Polymetacrylathomo und -copolymer, Acrylatdispersionen, Polyester ist.

5. Verfahren nach Anspruch 1 bis 4,
**dadurch gekennzeichnet, dass**
die Trocknung bei einer Temperatur von 180 bis 600 °C stattfindet.

6. Verfahren nach Anspruch 1 bis 5,
**dadurch gekennzeichnet, dass**
das Substrat nach der Trocknung bei 180 bis 600 °C an der Luft gekühlt, oder in Wasser auf Raumtemperatur gequencht, und anschließend getrocknet, erneut erhitzt, und mindestens 10 Min. lang bei einer Temperatur von 300 bis 600 °C gehalten wird.

7. Verfahren nach Anspruch 1 bis 6,
**dadurch gekennzeichnet, dass**
der Sollack durch Sprühen, Eintauchen oder Bandbeschichtung auf das Substrat aufgetragen wird.

8. Absorberbeschichtung für die Solarthermie, die auf einem Metallsubstrat aufgetragen wird, insbesondere eine Beschichtung, die auf einem dünnen Aluminiumblech aufgetragen wird,
**dadurch gekennzeichnet, dass**
die Beschichtung ein wässriger Solgel-Typ ist, basierend auf einem Metalloxidsol, und mit Pigmentpartikeln von Manganferritschwarz $Mn_3Cu_2FeO_8$, die vor dem Auftragen auf das Substrat innig in das Sol eingemischt werden.

9. Absorberbeschichtung für die Solarthermie nach Anspruch 8,
**dadurch gekennzeichnet, dass**
das Metalloxid, auf dem das Sol basiert, $CeO_2$ ($NO_3$) oder $CeO_2$ (ACT) ist, mit 5 bis 30 Gew.-% $CeO_2$, das eine Partikelgröße von 2 bis 100 nm aufweist.

10. Absorberbeschichtung für die Solarthermie nach Anspruch 8 bis 9,
**dadurch gekennzeichnet, dass**
sie auf einer Mischung aus zwei Sols basiert.

11. Absorberbeschichtung für die Solarthermie nach Anspruch 8 bis 10,
**dadurch gekennzeichnet, dass**
das zweite Sol ein nanoskaliges $Al_2O_3$, $SnO_2$, $Y_2O_3$, ZnO oder $SiO_2$ ist.

12. Absorberbeschichtung für die Solarthermie nach Anspruch 8 bis 11,
**dadurch gekennzeichnet, dass**
das $CeO_2$ 15 bis 25 Gew.-% ausmacht.

13. Absorberbeschichtung für die Solarthermie nach Anspruch 8 bis 12,
**dadurch gekennzeichnet, dass**
ein organisches Additiv hinzugefügt, und unmittelbar vor dem Auftragen auf das Substrat, und vor der Wärmebehandlung für die Verbesserung der Anhaftung in den Sollack eingemischt wird.

14. Absorberbeschichtung für die Solarthermie nach Anspruch 13,
**dadurch gekennzeichnet, dass** das Additiv ein Acrylat- und Styrocopolymer, eine Mischung aus Polyvinylacetatpolymer und -copolymer, Polyvinylacetat, Polyvinylalkohol, Polyvinylether, Polyurethan und/oder Polymetacrylathomo und -copolymer, Acrylatdispersionen, Polyester ist.

**Revendications**

1. Procédé de fabrication d'un revêtement d'absorbeur pour chauffage solaire à appliquer sur un substrat métallique, en particulier un revêtement à appliquer sur une fine tôle d'aluminium, **caractérisé en ce que** le revêtement est un type sol-gel aqueux à base d'un sol d'oxyde de métal où des particules de pigment noir de ferrite de manganèse $Mn_3Cu_2FeO_8$ sont intimement mélangées dans le sol suivi par l'application de la laque de sol mélangée sur le substrat puis le séchage à l'air à température élevée pour obtenir le revêtement sol-gel.

2. Procédé selon la revendication 1,
**caractérisé en ce que** le revêtement est basé sur le mélange de deux sols.

3. Procédé selon les revendications 1 et 2,
**caractérisé en ce que**
un additif organique est ajouté et mélangé dans la laque de sol immédiatement avant l'application sur le substrat.

4. Procédé selon la revendication 3,
**caractérisé en ce que**
l'additif est un copolymère d'acrylate et de styrène, un mélange de copolymère et polymère d'acétate de polyvinyle, de l'acétate de polyvinyle, de l'alcool polyvinylique, de l'éther de polyvinyle, un homo- et copolymère de polyuréthane et/ou polymétacrylate, des dispersions d'acrylate, du polyester.

5. Procédé selon les revendications 1 à 4,
**caractérisé en ce que**
le séchage a lieu à une température comprise entre 180 et 600 °C.

6. Procédé selon les revendications 1 à 5,
**caractérisé en ce que**
le substrat, après le séchage à 180 à 600 °C, est refroidi à l'air ou trempé à température ambiante dans l'eau et après ceci est séché, de nouveau chauffé et maintenu à une température de 300 à 600 °C pendant au moins 10 minutes.

7. Procédé selon les revendications 1 à 6,
**caractérisé en ce que**
la laque de sol est appliquée au substrat par pulvérisation, immersion ou prélaquage en continu.

8. Revêtement d'absorbeur pour chauffage solaire à appliquer sur un substrat métallique, en particulier un revêtement à appliquer sur une fine tôle d'aluminium,
**caractérisé en ce que**
le revêtement est un type sol-gel aqueux à base d'un sol d'oxyde de métal et avec des particules de pigment noir de ferrite de manganèse $Mn_3Cu_2FeO_8$ qui sont intimement mélangées dans le sol avant l'application sur le substrat.

9. Revêtement d'absorbeur pour chauffage solaire selon la revendication 8,
**caractérisé en ce que**
l'oxyde de métal sur lequel le sol est basé est le $CeO_2$ ($NO_3$) ou $CeO_2$ (ACT) avec 5 à 30 % de $CeO_2$ ayant une taille de particule de 2 à 100 nm.

10. Revêtement d'absorbeur pour chauffage solaire selon les revendications 8 et 9,
**caractérisé en ce que**
il est basé sur un mélange de deux sols.

11. Revêtement d'absorbeur pour chauffage solaire selon les revendications 8 à 10,
**caractérisé en ce que**
le second sol est un $Al_2O_3$, $SnO_2$, $Y_2O_3$, ZnO ou $SiO_2$ à l'échelle nanométrique.

12. Revêtement d'absorbeur pour chauffage solaire selon les revendications 8 à 11,

**caractérisé en ce que**
le CeO$_2$ est compris entre 15 et 25 % en poids.

13. Revêtement d'absorbeur pour chauffage solaire selon les revendications 8 à 12,
    **caractérisé en ce que**
    un additif organique est ajouté et mélangé dans la laque de sol immédiatement avant l'application sur le substrat et avant le traitement thermique pour améliorer l'adhésion.

14. Revêtement d'absorbeur pour chauffage solaire selon la revendication 13,
    **caractérisé en ce que** l'additif est un copolymère d'acrylate et de styrène, un mélange de copolymère et polymère d'acétate de polyvinyle, de l'acétate de polyvinyle, de l'alcool polyvinylique, de l'éther de polyvinyle, un homo- et copolymère de polyuréthane et/ou polymétacrylate, des dispersions d'acrylate, du polyester.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007147399 A

- US 6605365 B

**Non-patent literature cited in the description**

- **LEON KALUZA et al.** *JOURNAL OF SOL-GEL SCIENCE AND TECHNOLOGY,* 01 January 2001, vol. 20 (1), 61-83